# EUROPÄISCHE PATENTSCHRIFT

(11) **EP 3 716 889 B1**
(45) Veröffentlichungstag und Bekanntmachung des Hinweises auf die Patenterteilung: **24.04.2024**
(21) Anmeldenummer: 18815125.2
(22) Anmeldetag: 28.11.2018
(51) Int. Cl.: A61C 8/00, A61C 13/00

(54) **VERFAHREN ZUR HERSTELLUNG EINES ZAHNERSATZTEILS AUS EINEM ZAHNERSATZFORMBLOCK**
METHOD FOR PRODUCING A DENTAL PROSTHESIS FROM A DENTAL PROSTHESIS FORMING BLOCK
PROCÉDÉ POUR FABRIQUER UNE PROTHÈSE DENTAIRE À PARTIR D'UN BLOC DE MATÉRIAU POUR LA PRODUCTION D'UNE PROTHÈSE DENTAIRE

(30) Priorität: 28.11.2017 DE 102017221343
(43) Veröffentlichungstag der Anmeldung: 07.10.2020
(73) Patentinhaber: Sirona Dental Systems GmbH, 64625 Bensheim (DE)
(72) Erfinder: SCHNEIDER, Sascha, 64367 Mühltal (DE); FORNOFF, Peter, 64385Reichelsheim (DE)
(74) Vertreter: Özer, Alpdeniz
(86) Internationale Anmeldenummer: PCT/EP2018/082834
(87) Internationale Veröffentlichungsnummer: WO 2019/106007

(56) Entgegenhaltungen:
- WO-A1-2004/103202
- WO-A1-2018/093408
- US-A1- 2011 045 439
- US-A1- 2017 239 021

## Beschreibung

### Technisches Gebiet

Die vorliegende Erfindung betrifft ein Verfahren zur Herstellung eines Zahnersatzteils aus einem Zahnersatzformblock.

### Stand der Technik

Einteilige Zahnimplantate, bei denen der Abutment-Teil fest mit dem Implantat verbunden ist, werden bisher in Standardformen vorproduziert. Diese Standardimplantate können beispielsweise aus Keramik oder Titan bestehen und linear oder auch abgewinkelt sein. Die Individualisierung der einteiligen Standardimplantate ist allerdings schwierig, da die vorproduzierten Teile dafür unter Berücksichtigung einer späteren Einschraubrotation und Einschraubhöhe extraoral gehalten und bearbeitet werden müssen. Standardimplantate erst nach dem Einsetzen und Einheilen in den Kiefer zu individualisieren ist sehr schwierig, da die einzubringende Energie die Teile erwärmen oder lockern könnte.

Eine Alternative zu den Standardimplantaten besteht deshalb in Implantaten, die aus mehreren Teilen bestehen. Hierbei ist eine Implantatschraube ein separates Standardteil, das in einen individualisierbare Abutment-Aufbau eingeschraubt werden kann. Dieser kann dann problemlos extraoral bearbeitet werden. Allerdings kann es bei einem mehrteiligen Implantat zu Spaltenbildung zwischen den einzelnen Elementen kommen. Durch diese können Bakterien in das Innere des Implantats wandern und von dort durch mechanische Effekte des Kauens stoßweise über die Zeit herauswandern und den Knochen infizieren. Dies führt zu einer Periimplantitis, die sich in Knochenrückgang und einem daraus folgenden Implantatverlust äußert. Außerdem kann es in mehrteiligen Implantaten zu einem mechanischen Verschleiß an der Verbindung der Elemente kommen. Nach mehreren Millionen Kauzyklen lockert sich die Schraube und damit auch der Aufbau oder die Schraube zerbricht sogar.

Zur Herstellung der Aufbauten mehrteiliger Implantate kommen zunehmend automatisierte CAD/CAM-Verfahren zum Einsatz, in denen aus einem Zahnersatzformblock das jeweilige Zahnersatzteil herausgearbeitet wird. Dies ermöglicht es den Herstellern eine hohe gleichbleibende Qualität und Passgenauigkeit des Zahnersatzes bei gleichzeitig günstigen Preisen anzubieten.

US2017/239021 A1 und WO2004/103202A offenbaren jeweils Dental-Implantate aus Metall. WO2018093408 offenbart ein individuelles einteiliges Zahnimplantat. US2011045439A1 offenbart ein einteiliges enossales Zahnimplantat aus Titan, Zirkoniumdioxid oder hochfestem Polymer, das eine gebundene transmukosale Abutmentkomponente aus Keramik oder Polymer trägt Es ist eine Aufgabe der vorliegenden Erfindung, ein Verfahren zur Herstellung eines Zahnersatzteils bereitzustellen.

Darstellung der Erfindung Diese Aufgabe wird durch das Verfahren gemäß Anspruch 1 gelöst. Die weiteren Ansprüche definieren vorteilhafte Ausführungsformen und weitere Entwicklungen.

Ebenfalls offenbart ist ein Zahnersatzformblock (nicht beansprucht) zur Herstellung eines Zahnersatzteils, insbesondere eines Implantats, welcher einen Stift mit einem selbstschneidenden Außengewinde aufweist. Der Stift ist in einer ersten Oberfläche des Zahnersatzformblocks angeordnet. Indem der Stift bereits Teil des Zahnersatzformblocks ist, ist es möglich, aus diesem extraoral mittels eines CAD/CAM-Verfahrens ein einteiliges Zahnersatzteil in Form eines Implantats zu fertigen. Dieses vereint den Vorteil der einteiligen Ausführung von Standardimplantaten, dass keine Lockerung von Einzelkomponenten stattfinden kann und dass sich in dem Implantat keine Spalten bilden können, welche von Bakterien besiedelt werden, mit dem Vorteil mehrteiliger Implantate, dass eine extraorale Fertigung des Aufbaus möglich ist. Diese Fertigung muss nicht in einem zahnmedizinischen Labor erfolgen, sondern kann auch in einer Zahnarztpraxis durchgeführt werden.

Der Stift besteht vorzugsweise aus einem Metall, wie insbesondere Titan. Der Zahnersatzformblock besteht bevorzugt zumindest teilweise aus einer Keramik, wie insbesondere Zirkoniumdioxid. Dies ermöglicht auf der einen Seite eine sichere Verankerung des Zahnersatzteils im Kiefer mittels des Metallstifts und auf der anderen Seite eine ästhetisch ansprechende Gestaltung des Aufbaus aus der Keramik.

Um dem Aufbau eine besondere Stabilität zu verleihen ist es bevorzugt, dass er ein inneres Material aufweist, das zumindest teilweise von einem äußeren Material umgeben ist. Besonders bevorzugt handelt es sich beim dem inneren Material um ein Metall und bei dem äußeren Material um eine Keramik. Hierdurch können auch aus dieser Ausführungsform des Zahnersatzformblocks ästhetisch ansprechende Zahnersatzteile mit einer Keramikoberfläche des Aufbaus gefertigt werden, während der Metallkern den Zahnersatzteilen besondere Stabilität verleiht. Dabei weist das innere Material in einer Ausführungsform eine geringere Härte als das äußere Material auf. Unter der Härte wird dabei insbesondere die Vikers-Härte (HV 10) gemäß der Norm DIN EN ISO 6507-1:2005 bis -4:2005 verstanden. Als inneres Material ist ein Metall, wie insbesondere Titan (Vikers-Härte ca. 200 HV 10) wegen guter Biokompatibilität und Einheileigenschaften vorteilhaft, als äußeres Material ist eine Keramik, wie insbesondere Zirkoniumdioxid (ZrO₂, Vikers-Härte ca. 1250 HV 10) oder eine Lithiumdisilikat- (Vikers-Härte ca. 650 HV 10) oder Glaskeramik wegen der Ästhetik vorteilhaft.

Alternativ handelt es sich besonders bevorzugt bei dem inneren Material und dem äußeren Material um Metalle. Hierbei ist das Metall des äußeren Materials härter als das Metall des inneren Materials. Als inneres Material ist Titan (Vikers-Härte ca. 200 HV 10) wegen guter Biokompatibilität und Einheileigenschaften vorteilhaft, als äußeres Material ist eine Cobalt-Chrom-Legierung (CoCr, Vikers-Härte ca. 300 HV 10) wegen der Wirtschaftlichkeit vorteilhaft.

In noch einer anderen Ausführungsform weisen das innere Material und das äußere Material dieselbe Härte auf. Insbesondere sind das innere und das äußere Material identisch. Als inneres Material und äußeres Material ist in diesem Fall Zirkoniumdioxid (ZrO₂, Vikers-Härte ca. 1250 HV 10) wegen guter Biokompatibilität und Ästhetik vorteilhaft.

In noch einer anderen Ausführungsform weist das innere Material eine größere Härte als das äußere Material auf. Als inneres Material ist Zirkoniumdioxid (ZrO₂, Vikers-Härte ca. 1250 HV 10) wegen der Biokompatibilität und Ästhetik vorteilhaft, als äußeres Material ist eine Lithiumdisilikat- oder Glaskeramik wegen der Ästhetik und Verarbeitbarkeit vorteilhaft.

Um eine besonders sichere Verankerung des Stifts im Zahnersatz formblock zu gewährleisten ist es bevorzugt, dass der Stift einstückig mit dem inneren Material gebildet ist.

Um das Einheilen des Stifts in den Kieferknochen zu beschleunigen, weist diese vorzugsweise eine Osseointegrationsbeschichtung auf. Diese besteht insbesondere aus Hydroxylapatit. Hydroxylapatit ist ein natürlicher Bestandteil des Knochengewebes. Das Stiftmaterial wird also mit einem bioidentischen Tarnmantel bedeckt, sodass das Einwachsen des Stifts in den Kieferknochen mit dem Heilungsverlauf eines Knochenbruchs identisch ist. Das Aufbringen dieser Osseointegrationsbeschichtung bereits auf den Stift des Formblocks ist vorteilhaft, da derartige Beschichtungen in einem zahntechnischen Labor oder in einer Zahnarztpraxis in der Regel nicht herstellbar sind. Durch die Bearbeitung des Zahnersatzformblocks in einem CAD/CAM-Verfahren kann außerdem gewährleistet werden, dass keine Beschädigung der Osseointegrationsbeschichtung erfolgen kann. Dies wäre beispielsweise bei einteiligen Standardimplantaten nicht gewährleistet, da diese zur Bearbeitung mit ihrem Stift eingespannt werden müssen.

In einer bevorzugten Form des Zahnersatzblocks weist er ein Innengewinde auf, welches von einer zweiten Oberfläche durch den Zahnersatzformblock bis zu dem Stift hindurchgeht. Die zweite Oberfläche liegt der ersten Oberfläche gegenüber. Hierdurch können nach Fertigung des einteiligen Implantats weitere Elemente auf dieses aufgeschraubt werden.

Im erfindungsgemäßen Verfahren wird zunächst ein Zahnersatzformblock bereitgestellt. Das Zahnersatzteil wird durch Materialabtragung aus dem Zahnersatzformblock hergestellt. Diese erfolgt mittels eines CAD/CAM-Verfahrens. Dabei wird die Richtung der Materialabtragung so gewählt, dass der Stift einen Teil des fertigen Zahnersatzteils bildet. Das Verfahren ermöglicht es also, bekannte CAD/CAM-Techniken einzusetzen, um aus dem Zahnersatzformblock ein einteiliges Zahnersatzteil, insbesondere ein Implantat, herzustellen.

Anders als bei der Bearbeitung von einteiligen Standardimplantaten, welche mittels ihres Stifts eingespannt werden müssen, kann der Zahnersatzformblock in einem CAD/CAM-Verfahren über eine seiner Oberflächen fixiert werden. Es ist vorteilhaft den Stift während der Materialabtragung vor einem Kontakt mit Materialabtragungswerkzeugen zu schützen. So kann verhindert werden, dass das Außengewinde des Stifts beschädigt wird oder dass eine Schädigung einer eventuell vorhandenen Osseointegrationsbeschichtung erfolgt.

In einer bevorzugten Ausführungsform des Verfahrens wird dieser Schutz des Stifts erreicht, indem er während der Materialabtragung von einer Abdeckung bedeckt wird.

In einer anderen bevorzugten Ausführungsform des Verfahrens wird in dem CAD/CAM-Verfahren ein virtuelles Schutzvolumen um den Stift herum vorgesehen. Die Materialabtragungswerkzeuge werden dann so gesteuert, dass sie nicht in das Schutzvolumen eingeführt werden dürfen.

Wenn der Zahnersatzformblock ein Innengewinde aufweist, welches von der zweiten Oberfläche bis zu dem Stift hindurchgeht, wird das Zahnersatzteil vorzugsweise so hergestellt, dass ein Zahnersatzversorgungelement in das Innengewinde des Zahnersatzteils eingeschraubt werden kann. Bei dem Zahnersatzversorgungelement kann es sich beispielsweise um ein Abutment handeln. In dieser Ausführungsform bildet das einstückige Zahnersatzteil dann lediglich einen Sockel für das Abutment.

Das offenbarte, nicht beanspruchte Computerprogramm ist eingerichtet, um alle Schritte des Verfahrens auszuführen, wenn es auf einem Rechengerät abläuft. Es ermöglicht die Implementierung unterschiedlicher Ausführungsformen des Verfahrens auf einem Rechengerät eines dentalen CAD/CAM-Systems, ohne hieran bauliche Veränderungen vornehmen zu müssen. Hierzu ist es insbesondere auf einem maschinenlesbaren Datenträger gespeichert.

Durch Aufspielen des Computerprogramms auf ein herkömmliches dentales CAD/CAM-System, wird ein erfindungsgemäßes dentales CAD/CAM-System erhalten, welches eingerichtet ist, um das Verfahren auszuführen.

### Kurze Beschreibung der Zeichnungen

Ausführungsbeispiele der Erfindungen sind in Zeichnungen dargestellt und werden in der nachfolgenden Beschreibung näher erläutert.
Fig. 1 zeigt eine isometrische Darstellung eines nicht beanspruchten Zahnersatzformblocks.
Fig. 2 zeigt eine Querschnittansicht des Zahnersatzformblocks gemäß Fig. 1.
Fig. 3 zeigt eine isometrische Darstellung eines nicht beanspruchten Zahnersatzformblocks.
Fig. 4 zeigt eine Querschnittansicht des Zahnersatzformblocks gemäß Fig. 3.
Fig. 5 zeigt einen ersten Bearbeitungsschritt eines Zahnersatzformblocks in einem Verfahren gemäß einem Ausführungsbeispiel der Erfindung.
Fig. 6 zeigt einen ersten Bearbeitungsschritt eines Zahnersatzformblocks in einem Verfahren gemäß einem anderen Ausführungsbeispiel der Erfindung.
Fig. 7 zeigt einen zweiten Bearbeitungsschritt eines Zahnersatzformblocks in einem Verfahren gemäß einem Ausführungsbeispiel der Erfindung.
Fig. 8 zeigt eine Querschnittdarstellung eines Zahnersatzteils, welches mittels eines Ausführungsbeispiels des erfindungsgemäßen Verfahrens herstellbar ist.

### Ausführungsbeispiele

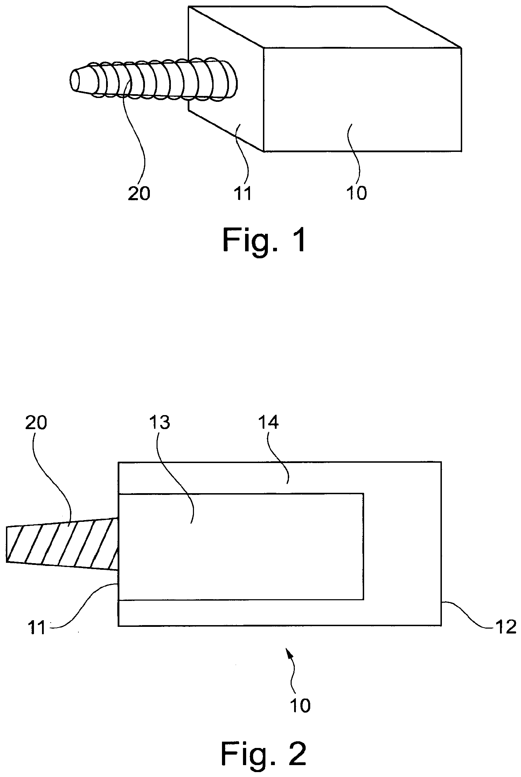

Ein Zahnersatzformblock 10 (nicht beansprucht) ist in den Fig. 1 und 2 dargestellt. Er ist quaderförmig und weist eine Oberfläche 11 und eine dieser gegenüberliegende zweite Oberfläche 12 auf. Ein Kern des Zahnersatzformblocks 10 besteht aus Titan als einem inneren Material 13. Auf dieses ist Zirkoniumdioxid als äußeres Material 14 aufgepresst. Dadurch besteht die erste Oberfläche 11 teilweise aus Titan und teilweise aus Zirkoniumdioxid, während alle anderen Oberflächen des Zahnersatzformblocks 10 ausschließlich aus Zirkoniumdioxid bestehen. Das innere Material 13 ist einstückig mit einem Stift 20 ausgebildet, der ein selbstschneidendes Außengewinde aufweist und aus der ersten Oberfläche 11 heraussteht. Das Außengewinde des Stifts 20 ist mit Hydroxylapatit beschichtet.

In einem zweiten Ausführungsbeispiel des Zahnersatzformblocks 10 besteht der Kern des Zahnersatzformblocks 10 aus Titan als einem inneren Material 13. Bei dem äußeren Material 14 handelt es sich um Cobalt-Chrom-Legierung (CoCr).

In einem dritten Ausführungsbeispiel des Zahnersatzformblocks 10 besteht der Kern des Zahnersatzformblocks 10 aus Titan als einem inneren Material 13. Bei dem äußeren Material 14 handelt es sich um eine Lithiumdisilikat- oder Glaskeramik.

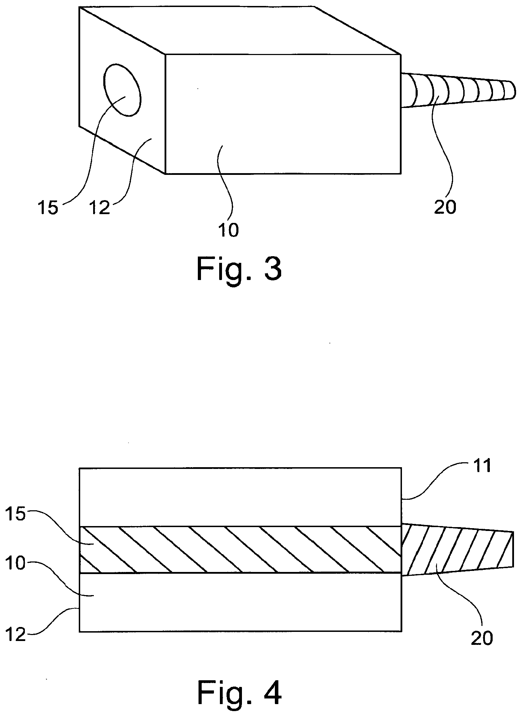

In einem vierten Ausführungsbeispiel des Zahnersatzformblocks 10, das in den Fig. 3 und 4 dargestellt ist, besteht dieser vollständig aus Zirkoniumdioxid, an welches an der ersten Oberfläche 11 der Stift 20 angesetzt ist. Diese besteht im vierten Ausführungsbeispiel aus mit Hydroxylapatit beschichtetem Titan. Zwischen der ersten Oberfläche 11 und der zweiten Oberfläche 12 geht eine Öffnung mit einem Innengewinde 15 durch den Zahnersatzformblock 10 hindurch.

In einem fünften Ausführungsbeispiel des Zahnersatzformblocks 10 weist dieser ebenfalls die in Fig. 3 und 4 dargestellte Struktur auf Sowohl der Zahnersatzformblock 10 als auch der Stift 20 bestehen aus Zirkoniumdioxid. Der Stift ist mit Hydroxylapatit beschichtet.

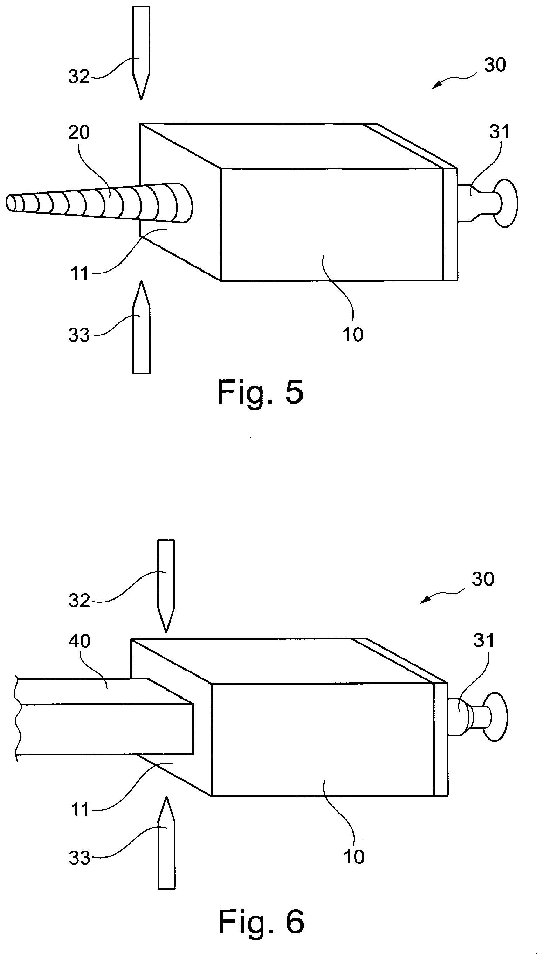

In einem ersten Ausführungsbeispiel des erfindungsgemäßen Verfahrens wird in einem dentalen CAD/CAM-System 30 eine gewünschte Form eines Zahnersatzteils festgelegt. Dann wird ein Zahnersatzformblock 10 gemäß einem der voranstehend beschriebenen Ausführungsbeispiele in das CAD/CAM-System 30 eingesetzt und dort an seiner zweiten Oberfläche 12 mittels eines Blockhalters 31 fixiert. Dies ist in Fig. 5 gezeigt. Materialabtragungswerkzeuge 32, 33 werden oberhalb und unterhalb des Zahnersatzformblocks 10 positioniert. Um den Stift 20 herum wird ein virtuelles Schutzvolumen definiert, in welches die Materialabtragungswerkzeuge 32, 33 nicht eindringen dürfen.

Ein zweites Ausführungsbeispiel des erfindungsgemäßen Verfahrens unterscheidet sich von dem ersten Ausführungsbeispiel darin, dass auf das virtuelle Schutzvolumen verzichtet wird. Stattdessen erfolgt ein physikalischer Schutz des Stifts 20, indem eine Abdeckung 40 so über diese *gestülpt* wird, dass sie den Stift 20 vollständig umschließt. Dies ist in Fig. 6 dargestellt.

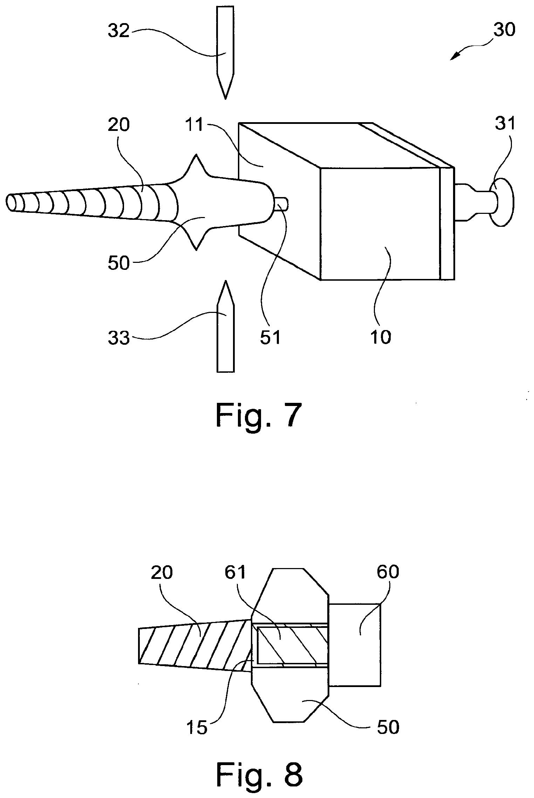

Mittels der Materialabtragungswerkzeuge 32, 33 erfolgt in beiden Ausführungsbeispielen des erfindungsgemäßen Verfahrens, beginnend an der ersten Oberfläche 11, eine Materialabtragung aus dem Zahnersatzformblock 10, um so ein Zahnersatzteil 50 zu bilden. Wie in Fig. 7 dargestellt ist, ist dieses am Ende der Materialabtragung nur noch über einen Abstich 51 mit dem Zahnersatzformblock 10 verbunden. Nach Entfernen des Abstichs 51 kann das fertige Zahnersatzteil 50, welches einstückig mit dem Stift 20 ausgebildet ist, aus dem CAD/CAM-System 30 entnommen werden.

Wurde das Zahnersatzteil 50 aus einem Zahnersatzformblock 10 gemäß seinem vierten Ausführungsbeispiel hergestellt, so weist es noch immer das Innengewinde 15 zwischen dem Stift 20 und einer im Zuge der Materialabtragung erzeugten Oberfläche, welche dem Stift 20 gegenüberliegt, auf. Ein Zahnersatzversorgungselement 60 in Form eines Abutments kann mittels einer Schraube 61 in das Innengewinde eingeschraubt werden, wie in Fig. 8 dargestellt ist.

Die voranstehend beschriebenen Beispiele des Zahnersatzformblocks und des Verfahrens ermöglichen die einteilige individualisierte Herstellung von Zahnersatzteilen in Form von Implantaten.

## Patentansprüche

1. Computerimplementiertes Verfahren zur Herstellung eines fertigen Zahnersatzteils (50) in einem dentalen CAD/CAM-System (30) mit Materialabtragungswerkzeugen (32, 33), umfassend:
- Bereitstellen eines Zahnersatzformblocks (10), wobei ein Stift (20) mit einem selbstschneidenden Außengewinde an einer ersten Oberfläche (11) des Zahnersatzformblocks (10) angeordnet ist,
- Festlegen einer gewünschten Form eines fertigen Zahnersatzteils (50), **dadurch gekennzeichnet, dass** das Verfahren weiter umfasst:
- Einsetzen und Fixieren des Zahnersatzformblocks (10) an seiner zweiten Oberfläche (12), die der ersten Oberfläche (11) gegenüberliegt, mittels eines Blockhalters (31) in das CAD/CAM-System (30),
- Herstellung des Zahnersatzteils (50) durch Materialabtragung aus dem Zahnersatzformblock (10) mittels eines CAD/CAM-Verfahrens, so dass der Stift (20) einen Teil des fertigen Zahnersatzteils (50) bildet, wobei der Zahnersatzteil am Ende der Materialabtragung nur noch über einen Abstich (51) mit dem Zahnersatzformblock (10) verbunden ist, wobei nach Entfernen des Abstichs (51) das fertige Zahnersatzteil (50), welches einstückig mit dem Stift 20 ausgebildet ist, aus dem CAD/CAM-System (30) entnommen werden kann

2. Verfahren nach Anspruch 1, **dadurch gekennzeichnet, dass** der Stift (20) während der Materialabtragung von einer Abdeckung (40) bedeckt wird.

3. Verfahren nach Anspruch 2, **dadurch gekennzeichnet, dass** das CAD/CAM-Verfahren ein virtuelles Schutzvolumen um den Stift (20) herum vorsieht, in das keine Materialabtragungswerkzeuge (32, 33) eingeführt werden dürfen.

## Claims

1. A computer-implemented method for producing a finished dental prosthesis (50) in a dental CAD/CAM system (30) using material removal tools (32, 33), the method comprising:
- providing a dental prosthesis forming block (10), wherein a pin (20) with a self-tapping outer thread is arranged on a first surface (11) of the dental prosthesis forming block (10),
- establishing a desired form of a finished dental prosthesis (50), **characterized in that** the method further comprises:
- using a block holder (31), inserting and fixing the dental prosthesis forming block (10) in the CAD/CAM system (30) at the second surface (12) of the prosthesis forming block, the second surface being opposite to the first surface (11),
- producing the dental prosthesis (50) by way of material removal from the dental prosthesis forming block (10) using a CAD/CAM method so that the pin (20) forms a part of the finished dental prosthesis (50), wherein at the end of the material removal, the dental prosthesis is only still connected to the dental prosthesis forming block (10) via a tap (51), wherein the finished dental prosthesis (50), which is formed in a single piece together with the pin 20, can be withdrawn from the CAD/CAM system (30) after removal of the tap (51).

2. The method according to claim 1, **characterized in that** the pin (20) is covered by a cover (40) during the material removal.

3. The method according to claim 2, **characterized in that** the CAD/CAM method provides a virtual protective volume around the pin (20), no material removal tools (32, 33) being allowed to be introduced into the protective volume.

## Revendications

1. Procédé mis en oeuvre par un ordinateur pour fabriquer une prothèse dentaire finie (50) dans un système CAO/FAO dentaire (30) avec des outils d'enlèvement de matière (32, 33), comprenant :
- la fourniture d'un bloc de formage de prothèse dentaire (10), dans lequel une broche (20) dotée d'un filetage externe autotaraudeur est agencée sur une première surface (11) du bloc de formage de prothèse dentaire (10),
- la détermination de la forme souhaitée d'une prothèse dentaire finie (50), **caractérisé en ce que** le procédé comprend en outre :
- l'installation et la fixation du bloc de formage de prothèse dentaire (10) sur sa deuxième surface (12), opposée à la première surface (11), à l'aide d'un porte-bloc (31) dans le système CAO/FAO (30),
- la fabrication de la prothèse dentaire (50) par enlèvement de matière du bloc de formage de prothèse dentaire (10) à l'aide d'un procédé CAO/FAO, de sorte que la broche (20) fasse partie de la prothèse dentaire finie (50), dans lequel la prothèse dentaire n'est plus connectée au bloc de formage de prothèse dentaire (10) que par une coulée (51) à la fin de l'enlèvement de matière, dans lequel la prothèse dentaire finie (50), qui est formée d'une seule pièce avec la broche 20, peut être retirée du système CAO/FAO (30) après que la coulée (51) a été éliminée.

2. Procédé selon la revendication 1, **caractérisé en ce que** la broche (20) est recouverte par un capot (40) lors de l'enlèvement de matière.

3. Procédé selon la revendication 2, **caractérisé en ce que** le procédé CAO/FAO crée autour de la broche (20) un volume de protection virtuel dans lequel aucun outil d'enlèvement de matière (32, 33) ne peut être engagé.
